Europäisches Patentamt

European Patent Office

Office européen des brevets

(11) Publication number: **0 062 454**
**B1**

## (12) EUROPEAN PATENT SPECIFICATION

(45) Date of publication of patent specification: **21.11.85**

(21) Application number: **82301562.3**

(22) Date of filing: **24.03.82**

(51) Int. Cl.⁴: **G 11 B 5/48,** G 11 B 21/16,
G 11 B 5/55

(54) Magnetic head apparatus for magnetic discs.

(30) Priority: **30.03.81 US 248764**

(43) Date of publication of application:
**13.10.82 Bulletin 82/41**

(45) Publication of the grant of the patent:
**21.11.85 Bulletin 85/47**

(84) Designated Contracting States:
**DE FR GB**

(56) References cited:
**DE-A-2 846 599**
**US-A-3 743 794**
**US-A-3 786 457**
**US-A-4 107 748**

(73) Proprietor: **DATA GENERAL CORPORATION**
**Route 9**
**Westboro Massachusetts 01581 (US)**

(72) Inventor: **Otavsky, Pavel**
**164 Middle Road**
**Southboro Massachusetts 01772 (US)**
Inventor: **Hinlein, Sigmund**
**68 Hudson Road**
**Sudbury Massachusetts 01776 (US)**

(74) Representative: **Pears, David Ashley et al**
**REDDIE & GROSE 16 Theobalds Road**
**London WC1X 8PL (GB)**

Courier Press, Leamington Spa, England.

## Description

The present invention relates to magnetic head apparatus for use with a spinning pack of magnetic discs, comprising a carriage for positioning magnetic heads relative to the discs, a mounting channel in the carriage defined between first and second sidewalls, and a plurality of head arms mounted with ends thereof in the channel engaging means for aligning and supporting the arms, the arms being cantilevered out of the channel and carrying magnetic heads.

Magnetic disc drive memory apparatus usually has one or more rigid rotatable discs coated with a material which permits storage of data on and retrieval of data from the disc surface. To accomplish the read and write operations a recording head is positioned adjacent to the surface of each disc. During operation of the memory apparatus, the heads are moved parallel to the surface of the discs to position the read/write gaps of the heads adjacent to the appropriate location on the disc surface where a read or write transaction is to take place.

A common type of rigid magnetic disc unit is the "IBM 3350" style disc drive. This unit has a plurality of magnetic rigid discs mounted about a central shaft. Each disc has one or more magnetic heads associated with it. The heads are mounted on head arms, up to four heads per arm. The head arms are mounted in a channel of the magnetic head carriage such that the head arms move in unison across the surface of the discs as the carriage moves. A typical head arm for use in this type of unit is the "Model 335004" manufactured by Applied Magnetics Corporation (USA).

Apparatus of the kind referred to in the first paragraph above is disclosed in DE—A— 2 846 599. The ends of the arms are received in opposed grooves in the two sidewalls.

In this prior art the carriage channel is difficult and costly to manufacture as it requires a substantial amount of machining to be performed on the channel. The channel structure is weakened and unfavourable resonances can result, causing degraded head arm performance.

The present invention relates to an improved apparatus which is free from the above-mentioned disadvantages and problems.

The invention is defined in claim 1 below and advantageous developments of the invention are defined in the dependent claims.

The invention will be described in more detail, by way of example, with reference to the accompanying drawings, in which:

Fig. 1 is a side view of several major elements of a magnetic disc unit;

Fig. 2 is a perspective view of an illustrative embodiment of the present invention including a segment of the magnetic head carriage showing head arm mounting elements in an exploded position;

Fig. 3 is a perspective view of a segment of the magnetic head carriage of Fig. 2 viewed from a different position to facilitate display of certain features;

Fig. 4 is a top view of the magnetic head carriage of Fig. 2 showing details of the apparatus after head arm mounting;

Fig. 5 is a cross sectional view of the head carriage showing details of the apparatus after head arm mounting;

Fig. 6 shows an alternative embodiment of the present invention; and

Fig. 7 shows another alternative embodiment of the present invention.

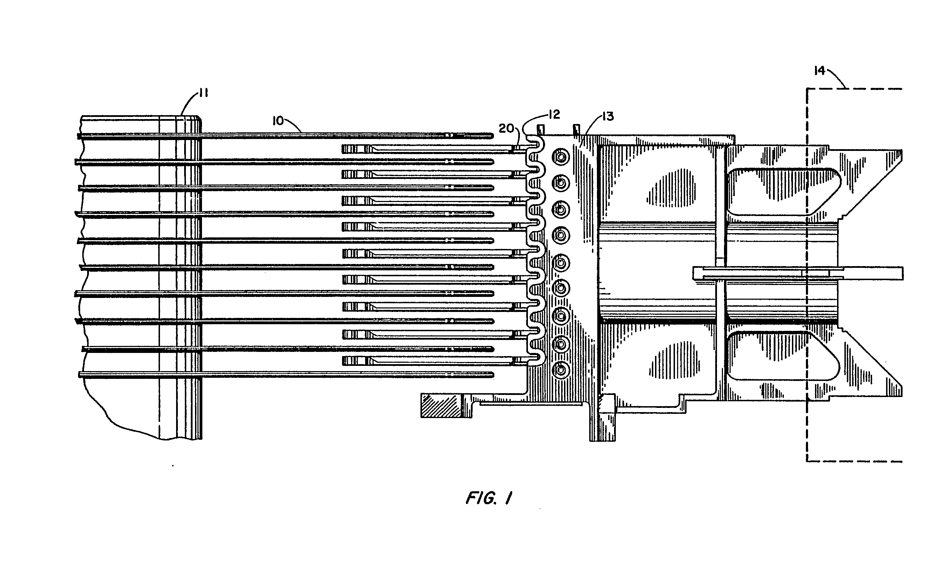

Referring to Fig. 1, a side view of a magnetic disc unit is presented. Magnetic discs 10 are mounted on a shaft 11. Magnetic head arms 20 are mounted in a channel 12 of a movable carriage 13 and are positioned in relation to the discs 10 by a motor 14 as required to accomplish read/write operations at various locations on a disc surface. Circuitry and wiring (not shown) for performing the read/write operations is attached to and extends from the magnetic head arms 20.

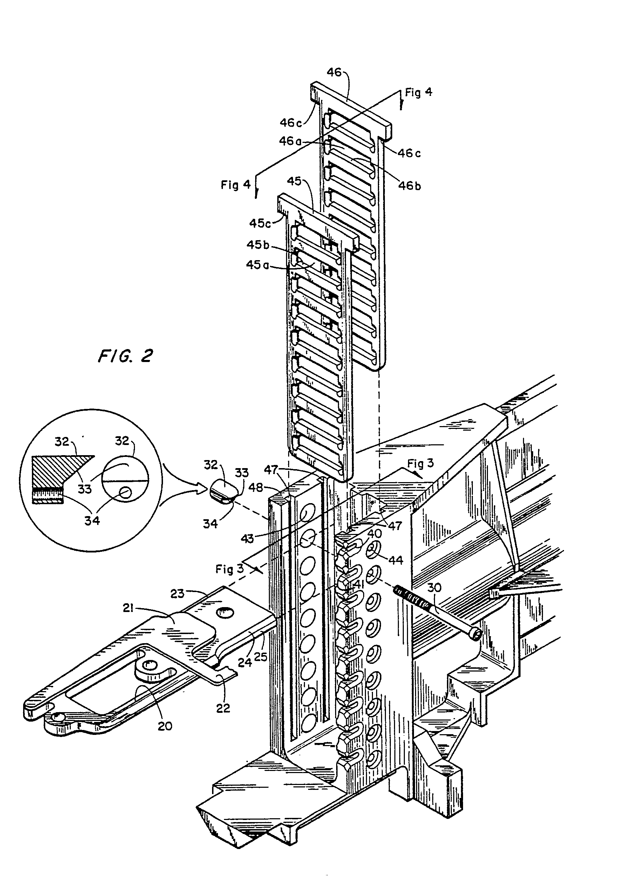

Referring now to Fig. 2, the mounting channel and head arm mounting elements are shown. Each head arm 20 has an associated clamping slug 32, aperture 43, bolt 30, aperture 44, aperture 45a and aperture 46a. These elements operate in conjunction with features of the mounting channel 12 (described below) to accomplish mounting of the head arms 20 on the carriage 13.

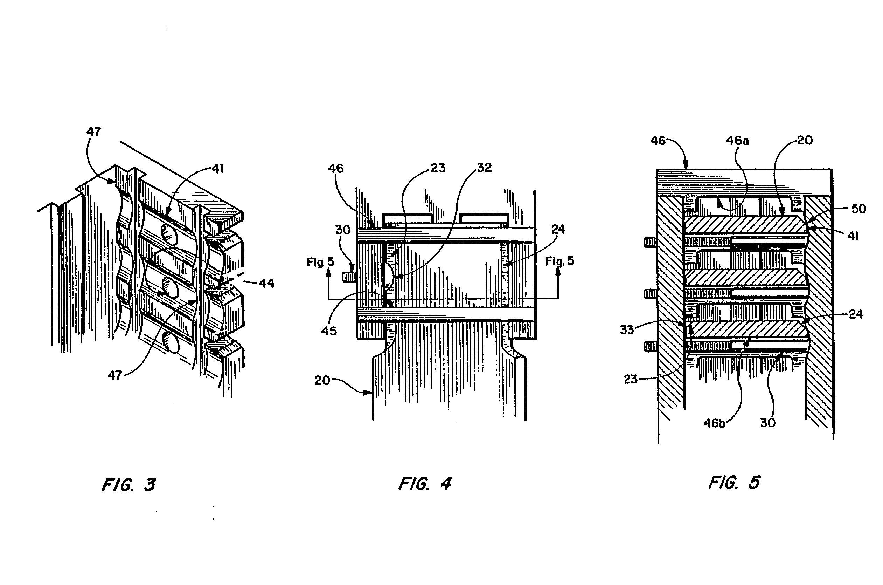

Referring to Figs. 2 to 5, a preferred embodiment of the invention is shown. It can be seen that a cross-section of the head arm mounting channel is substantially U-shaped, having a back wall and two substantially parallel side walls. Substantially identical ladder elements 45 and 46 are slidably mounted in channel grooves 47. Protruding sections 45c and 46c rest upon a carriage surface 48 when the ladder elements 45 and 46 are mounted in the channel and hold the ladder elements 45 and 46 in the proper vertical position. The ladder elements 45 and 46 have a like number of aligning apertures 45a and 46a therein. Each magnetic head arm 20 is mounted through an aperture 45a and 46a and is supported and aligned in the channel by a rung surfaces 45b and 46b. A clamping slug 32 is mounted through an aperture 43 such that the slug 32 protrudes into the channel. A bolt 30 is mounted through an aperture 44 in the opposite channel wall and mates with a threaded hole 34 in the slug 32. As the bolt 30 is turned, the slug 32 is drawn toward the magnetic head arm 20, causing surface 33 of the slug 32 to be pressed against an angled edge surface 23 of the magnetic head arm 20, thereby urging the magnetic head arm 20 into contact with the surfaces 45b and 46b of the ladder elements 45 and 46 and with an arcuate groove 41 in the opposite channel wall. The groove 41 is so located that only an edge 50 at the junction of surfaces 24 and 25 of the head arm 20 comes into contact with the channel wall as the slug 32 applies clamping force to the head arm. At the point of contact between the head arm and the wall, the curvature of the groove 41 is such that the head arm 20 is urged downward against the surfaces 45b and 46b of the ladder elements 45 and 46. It can therefore be seen that, in addition to the horizontal components of clamping force, both the slug 32 and the groove 41 create vertical force components which hold the head arm in contact with the ladder elements 45 and 46. The head arm 20 is thereby firmly attached to the carriage 13 and undesired head arm movement is substantially precluded. Grooves 40 in one channel wall accommodate electrical wiring 22 of the magnetic head arm 20 so as to prevent abrasion of the wiring 22 during carriage movements and the aperture 44 is counter-bored so that the head of the bolt 30 does not protrude beyond the outer surface of the channel wall after the head arm is mounted.

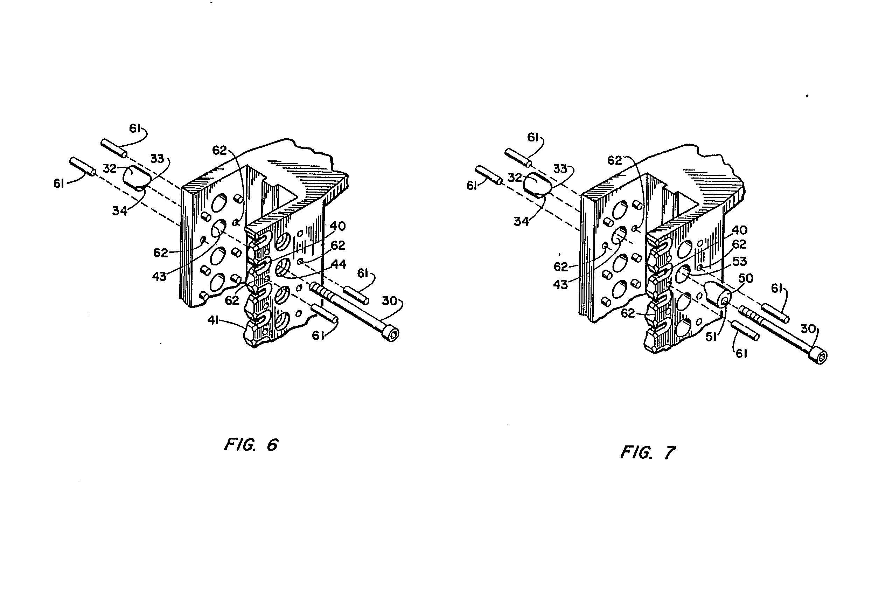

Referring to Fig. 6, a perspective view of a segment of the head carriage similar to the view in Fig. 2 is presented. This is one alternative embodiment of the mounting means. The supporting and aligning function of the ladder elements 45 and 46 is now performed by pins 61 which are press fitted through apertures 62 in both channel walls such that pins 61 protrude into the channel and the magnetic head arm 20 rests thereon.

Referring to Fig. 7, another perspective view of a segment of the head carriage similar to the view in Fig. 2 is presented. There is another alternative embodiment of the mounting means. The countersunk aperture 44 has been replaced by an aperture 53, which is of substantially the same size as aperture 43. In this figure, the bolt 30 passes through an aperture 51 in a slug 50 which fits in the aperture 53. The bolt 30 then mates with the aperture 34 in the slug 32. The slug 50 differs from the slug 32 only in that its aperture 51 is smooth while the aperture 34 is threaded. The need for grooves 41 in one channel wall has been eliminated because the head arm 20 is clamped between the two slugs, rather than being pressed against the wall. As the bolt 30 is turned, the slug 32 is drawn towards the slug 50, thereby forcing the head arm 20 into contact with the slugs 32 and 50 and the pins 61.

## Claims

1. Magnetic head apparatus for use with a spinning pack of magnetic discs, comprising a carriage (13) for positioning magnetic heads relative to the discs, a mounting channel (12) in the carriage defined between first and second sidewalls, and a plurality of head arms (20) mounted with ends thereof in the channel engaging means (45, 46, or 61) for aligning and supporting the arms, the arms being cantilevered out of the channel and carrying magnetic heads, characterised in that each arm (20) is clamped in place by a clamping slug (32) each such slug being disposed in an aperture in one of the sidewalls and urged by a fixing device (30) toward the other sidewall so as to press against the arm, each clamping slug (32) having an inclined surface (33) whereby the slug also urges the arm (20) in the direction of the channel length against the aligning and supporting means (45, 46 or 61).

2. Apparatus according to claim 1, characterised in that each clamping slug (32) in one sidewall is drawn towards the other sidewall by a fixing device (30) passing through the other sidewall.

3. Apparatus according to claim 1 or 2, characterised in that edges (50) of the arms (20) opposite to the edges (23) engaged by the slugs engage in grooves (41) in the second sidewall, the groove having inclined walls such as also to urge the arms (20) in the direction of the channel length against the aligning and supporting means (45, 46 or 61).

4. Apparatus according to claim 1, characterised in that clamping slugs (32, 50) are disposed in apertures (43, 53) in both sidewalls and urged towards each other to clamp against opposed edges (23, 24) of the arms (20).

5. Apparatus according to claim 4, characterised in that each pair of clamping slugs (32, 50) are drawn towards each other by a bolt passing through one slug (50) into a threaded hole (34) in the other slug (32).

6. Apparatus according to any of claims 1 to 5, characterised in that the aligning and supporting means comprises at least one ladder element (45, 46) extending along the channel (12), each arm (20) being supported and aligned against a corresponding rung (45b, 46b) of the or each ladder element.

7. Apparatus according to claim 6, characterised in that the or each ladder element (45, 46) is slid into opposed grooves (47) in the said sidewalls.

8. Apparatus according to any of claims 1 to 5, characterised in that the aligning and supporting means comprises a series of projections (61) on the inner faces of the said sidewalls.

9. Apparatus according to claim 8, characterised in that the projections are pins (61) mounted in holes (62) in the sidewalls.

## Patentansprüche

1. Magnetkopf-Anordnung für einen Stapel von Magnetplatten mit einem Schlitten (13) zum Positionieren von Magnetköpfen relativ zu den Magnetplatten, einem durch zwei Seitenwände des Schlittens begrenzten Montagekanal (12) und einer Vielzahl von Armen (20), die mit ihren einen Enden in Ausricht- und Stützmitteln (45, 46 bzw. 61) innerhalb des Montagekanals gelagert sind, aus dem Montagekanal herausragen und die Magnetköpfe tragen, dadurch gekennzeichnet, daß jeder Arm (20) durch ein Klemmstück (32) festgeklemmt ist, das in einer Öffnung in einer der Seitenwände angeordnet und durch ein Druck auf ihn ausübendes Befestigungsmittel (30) in Richtung der anderen Seitenwand vorgespannt ist und eine abgeschrägte Fläche (33) derart aufweist, daß das Klemmstück den Arm (20) auch in Längsrichtung des Montagekanals gegen die Ausricht- und Stützmittel (45, 46 bzw. 61) drückt.

2. Magnetkopf-Anordnung nach Anspruch 1, dadurch gekennzeichnet, daß jedes in der einen Seitenwand angeordnete Klemmstück mittels eines die andere Seitenwand durchragenden Befestigungsmittels (30) in Richtung der anderen Seitenwand gezogen ist.

3. Magnetkopf-Anordnung nach Anspruch 1 oder 2, dadurch gekennzeichnet, daß Ränder (50) der Arme (20), die den von den Klemmstücken erfaßten Rändern (23) gegenüberliegen, in Nuten (41) innerhalb der zweiten Seitenwand eingreifen, die derart schräge Wandungen aufweisen, daß die Arme (20) auch von diesen in Richtung der Längsachse des Montagekanals gegen die Ausricht- und Stützmittel (45, 46 bzw. 61) gedrückt werden.

4. Magnetkopf-Anordnung nach Anspruch 1, dadurch gekennzeichnet, daß in Öffnungen (43, 53) von beiden Seitenwänden Klemmstücke (32, 50) angeordnet sind, die zum Festklemmen von einander gegenüberliegenden Rändern (23, 24) der Arme (20) gegeneinander vorgespannt sind.

5. Magnetkopf-Anordnung nach Anspruch 4, dadurch gekennzeichnet, daß die beiden Klemmstücke (32, 50) je eines Paars durch einen Schraubenbolzen gegeneinander vorgespannt sind, der durch jeweils ein Klemmstück (50) hindurch in eine im jeweils anderen Klemmstück (32) ausgebildete Gewindebohrung (34) ragt.

6. Magnetkopf-Anordnung nach irgendeinem der Ansprüche 1 bis 5, dadurch gekennzeichnet, daß die Ausricht- und Stützmittel wenigstens ein längs des Montagekanals (12) erstrecktes Leiterelement (45, 46) aufweisen und jeder Arm (20) durch eine zugeordnete Sprosse (45b, 46b) des oder jedes Leiterelements ausgerichtet und gestützt ist.

7. Magnetkopf-Anordnung nach Anspruch 6, dadurch gekennzeichnet, daß das oder jedes Leiterelement (45, 46) in einander gegenüberliegende, in den Seitenwänden ausgebildete Nuten (47) eingeschoben ist.

8. Magnetkopf-Anordnung nach irgendeinem der Ansprüche 1 bis 5, dadurch gekennzeichnet, daß die Ausricht- und Stützmittel eine Anzahl von Vorsprüngen (61) an den Innenseiten der Seitenwände aufweisen.

9. Magnetkopf-Anordnung nach Anspruch 8, dadurch gekennzeichnet, daß die Vorsprünge aus in Löchern (62) der Seitenwände gelagerten Zapfen (61) bestehen.

**Revendications**

1. Appareillage à têtes magnétiques utilisable avec un ensemble de disques magnétiques, comprenant un chariot (13) pour positionner des têtes magnétiques par rapport aux disques, une rainure de montage (12) formée dans le chariot entre des première et des secondes parois latérales, et plusieurs bras porte-têtes (20) montés par leurs extrémités dans la rainure en s'engageant dans des moyens (45, 46 ou 61) servant à aligner et supporter les bras, les bras sortant en porte-à-faux de la rainure et portant des têtes magnétiques, caractérisé en ce que chaque bras (20) est bloqué en position par une goupille de blocage (32), chacune desdites goupilles étant disposée dans un trou d'une des parois latérales et étant poussée par un dispositif de fixateur (30) vers l'autre paroi latérale de façon à s'appliquer contre le bras, chaque goupille de blocage (32) comportant une surface inclinée (33) de façon que la goupille pousse également le bras (20) dans le sens de la longueur de la rainure en opposition aux moyens d'alignement et de support (45, 46, 46 ou 61).

2. Appareillage selon la revendication 1, caractérisé en ce que chaque goupille de blocage (32) engagée dans une paroi latérale est tirée vers l'autre paroi latérale par un dispositif de fixation (30) passant au travers de l'autre paroi latérale.

3. Appareillage selon la revendication 1 ou 2, caractérisé en ce que des bords (50) des bras (20) opposés aux bords (23) sollicités par les goupilles s'engagent dans des encoches (41) de la seconde paroi latérale, les encoches comportant des parois inclinées de manière à pousser les bras (20) dans les sens de la longueur de canal en opposition aux moyens d'alignement et de support (45, 46 ou 61).

4. Appareillage selon la revendication 1, caractérisé en ce que des goupilles de blocage (32, 50) sont disposées dans des trous (43, 45) des deux parois latérales et sont poussées l'une vers l'autre de façon à se bloquer contre des bords opposés (23, 24) des bras (20).

5. Appareillage selon la revendication 4, caractérisé en ce que les goupilles de blocage (32, 50) de chaque paire sont tirées l'une vers l'autre par un boulon passant au travers d'une goupille (50) pour pénétrer dans un trou fileté (34) de l'autre goupille.

6. Appareillage selon l'une quelconque des revendications 1 à 5, caractérisé en ce que les moyens d'alignement et de support comprennent au moins un élément formant échelle (45, 46) s'étendant le long de la rainure 12, chaque bras (20) étant supporté et aligné contre un barreau correspondant (45b, 46b) du ou de chaque élément formant échelle.

7. Appareillage selon la revendication 6, caractérisé en ce que le ou chaque élément formant échelle (45, 46) coulisse dans des encoches opposées (47) desdites parois latérales.

8. Appareillage selon l'une quelconque des revendications 1 à 5, caractérisé en ce que les moyens d'alignement et de support comprennent une série de saillies (61) sur les faces intérieures desdites parois latérales.

9. Appareillage selon la revendication 8 caractérisé en ce que les saillies sont des broches (61) montées dans des trous 62 des parois latérales.

FIG. 1

FIG. 2

FIG. 3

FIG. 4

FIG. 5

0 062 454

FIG. 6

FIG. 7

0 062 454